# EUROPÄISCHE PATENTSCHRIFT

(11) **EP 0 951 368 B1**
(45) Veröffentlichungstag und Bekanntmachung des Hinweises auf die Patenterteilung: **30.05.2001**
(21) Anmeldenummer: 97910303.3
(22) Anmeldetag: 17.09.1997
(51) Int. Cl.: B21F 1/00

(54) **STANZBIEGEMASCHINE**
PUNCHING-BENDING MACHINE
MACHINE A ESTAMPER/CINTRER

(30) Priorität: 08.01.1997 DE 29700192 U
(43) Veröffentlichungstag der Anmeldung: 27.10.1999
(73) Patentinhaber: FINZER, Heinz, D-79843 Löffingen 5 (DE)
(72) Erfinder: FINZER, Heinz, D-79843 Löffingen 5 (DE)
(74) Vertreter: Vollnhals, Aurel, Dipl.-Ing.
(86) Internationale Anmeldenummer: EP9705102
(87) Internationale Veröffentlichungsnummer: WO9830344

(56) Entgegenhaltungen:
- DE-A- 2 737 442
- DE-A- 4 027 900
- DE-A- 4 103 302
- DE-C- 4 112 571
- US-A- 4 532 794

## Beschreibung

Die Erfindung betrifft eine Stanzbiegemaschine nach dem Oberbegriff des Patentanspruchs 1.

Heutige Stanzbiegemaschinen sollen eine flexible Fertigung unterschiedlichster Bauteile mit möglichst geringen Umrüstzeiten ermöglichen. Aus der DE 41 03 302 A1 ist eine Stanzbiegemaschine bekannt, die ein auswechselbares Bearbeitungsmodul aufweist, das für eine bestimmte Fertigungsaufgabe aufgerüstet wird, so daß bei Umstellung der Fertigung lediglich das Bearbeitungsmodul gegen ein anderes bereits aufgerüstetes Bearbeitungsmodul ausgewechselt werden muß, wodurch sich sehr geringe Standzeiten der Maschinen verwirklichen lassen.

Zum Auswechseln des Bearbeitungsmoduls wird die Materialzuführung der Maschine zumindest teilweise demontiert und das Bearbeitungsmodul mittels eines Hebezeuges vom Maschinensockel gehoben. Anschließend wird ein anderes bereits aufgerüstetes Bearbeitungsmodul auf den Maschinensockel gehoben und die Materialzuführung wieder montiert. Der Erfindung liegt die Aufgabe zugrunde, eine sehr flexibel einsetzbare Stanzbiegemaschine zu schaffen, die einfach mit geringer Umrüstzeit umzurüsten ist.

Diese Aufgabe wird durch die Merkmale des Patentanspruchs 1 gelöst. Des weiteren wird eine Maschine geschaffen, die einen relativ geringen Platzbedarf aufweist.

Mit den Merkmalen des Patentanspruchs 1 wird eine Stanzbiegemaschine zur Fertigung unterschiedlicher Werkstücke geschaffen, die mit zumindest einem auswechselbaren Bearbeitungsmodul ausrüstbar ist, an dem Stanzbiegewerkzeuge vorgesehen sind, die mechanisch, hydraulisch oder pneumatisch angetrieben werden können. Das Bearbeitungsmodul wird von einem Portal aufgenommen, das über mindestens eine Seitenwand und eine mit dieser verbindbaren Quertraverse verfügt, wobei Lagereinrichtungen zur Lagerung des Bearbeitungsmoduls vorgesehen sind. Das Portal kann zur Aufnahme mehrerer Bearbeitungsmodule geeignet sein.

Bei einer Konstruktion mit nur einer Seitenwand ergibt sich ein auf einer Seite offenes Portal, das eine L-förmige Gestalt aufweist. Es ist möglich, eine solche Grundeinheit so zu gestalten, daß diese mit einer weiteren solchen Grundeinheit, die spiegelbildlich angeordnet wird, zu einem geschlossenen Portal ergänzt wird.

Für Maschinen, die von Anfang an für die Aufnahme mehrerer Bearbeitungsmodule konzipiert sind, ist jedoch eine Konstruktion mit zwei Seitenwänden, die mit der Quertraverse verbindbar sind und somit ein geschlossenes Portal ergeben, von Vorteil, da die in den Seitenwänden und der Quertraverse auftretenden maximalen Biegemomente geringer sind.

Vorteilhaft ist das Portal zur Aufnahme mehrerer Bearbeitungsmodule geeignet, um flexibel unterschiedliche Fertigungsaufgaben erfüllen zu können. Durch die Portalbauweise wird es möglich, die Bearbeitungsmodule einfach mittels üblicher Flurfördermittel, z.B. Hubstapler, an die Maschine anzudocken.

An einer Seitenwand kann eine Materialeinzugseinheit angebracht werden, die auch bei Wechsel des Bearbeitungsmoduls Komplett montiert bleiben kann, da die Seitenwände vom Wechsel der Bearbeitungsmodule nicht berührt werden. Es können auch an beiden Seitenwänden Materialeinzugseinheiten angebracht werden, um von beiden Seiten Material zuzuführen.

Wird die Quertraverse im oberen Bereich der Seitenwände vorgesehen, ergibt sich ein geschlosssenes Portal, das die Form eines gekippten C aufweist. Die Quertraverse kann jedoch auch in einem mittleren Bereich der Seitenwände vorgesehen sein, so daß sich ein H-förmiges Portal ergibt. Wesentlich ist lediglich, daß die Bearbeitungsmodule in den Zwischenraum zwischen den Seitenwänden plaziert werden können.

Es kann eine zweite Quertraverse vorgesehen sein, wobei eine Quertraverse oberhalb des Bearbeitungsmoduls und die zweite Quertraverse unterhalb des Bearbeitungsmoduls angeordnet sein kann. Diese Konstruktion ist ausgesprochen steif und erlaubt es, die untere Quertraverse als Lagereinrichtung für die Bearbeitungsmodule zu verwenden, worauf folgend noch eingegangen wird.

Die Aufnahme der Bearbeitungsmodule kann über eine Führungsschiene als Lagereinrichtung erfolgen. Bei dieser Gestaltung brauchen die Bearbeitungsmodule nur mit einer Fördereinrichtung in der richtigen Höhe auf die Führungsschiene gestellt werden und können dann problemlos in das Portal eingeschoben werden. Irgendwelches Hebezeug wird also zur Montage der Bearbeitungsmodule nicht benötigt.

Die Führungsschiene kann an einer Seitenwand oder einer Quertraverse vorgesehen sein. Selbstverständlich können auch mehrere Führungsschienen an unterschiedlichen Bauteilen vorgesehen sein.

Um die korrekte Position des Bearbeitungsmoduls zu gewährleisten, kann ein Anschlag, aber auch eine Zentriereinrichtung vorgesehen sein. Die Zentriereinrichtung zur Zentrierung des Bearbeitungsmodules kann an einer Seitenwand oder einer Quertraverse ausgebildet sein. Die Zentriereinrichtung kann einen Aufnahmedorn aufweisen. Dieser kann an dem Bearbeitungsmodul vorgesehen sein und in eine Ausnehmung am Portal eingreifen oder umgekehrt. Ein Anschlag kann an einer Quertraverse ausgebildet sein, wobei dieser auch durch die Quertraverse gebildet sein kann.

Zum Antrieb des Bearbeitungsmoduls kann an einer Quertraverse zumindest eine Antriebseinrichtung montierbar sein. Diese Antriebseinrichtung kann die Antriebsenergie mechanisch, hydraulisch oder pneumatisch auf das Bearbeitungsmodul übertragen.

Vorteilhaft ist die Positionierung der Antriebseinrichtung verstellbar. Werden mehrere Bearbeitungsmodule in dem Portal montiert, kann die Antriebseinrichtung mit unterschiedlichen Bearbeitungsmodulen in Eingriff gebracht werden. Die Bearbeitungsmodule können untereinander antriebsmäßig verbunden sein, so daß die Antriebsenergie von einem Bearbeitungsmodul an das nächste weitergeleitet wird. Durch die beschriebene flexible Einleitung der Antriebsenergie kann diese dort eingeleitet werden, wo die höchste Antriebsleistung verlangt wird.

Es kann zumindest eine Quertraverse zur Zuführung von Energie und/oder Steuerleitungen hohl ausgeführt sein. Diese Gestaltung hat zahlreiche Vorteile. Zum einen werden freiliegende Leitungen vermieden, die beim Betrieb der Maschine stören können. Zum anderen sind die Leitungen optimal gegen Beschädigung geschützt. Wird durch die Quertraverse Öl oder Druckluft geführt, so wird durch die große Abstrahlfäche der üblicherweise metallischen Quertraverse eine gute Kühlung dieser Medien erreicht, so daß u.U. eine separate Kühleinrichtung nicht erforderlich ist.

Der Anschluß der genannten Leitungen an den Bearbeitungsmodulen kann zweckmäßig über Steckverbindungen erfolgen. Diese können an der Maschine bzw. dem Bearbeitungsmodul so vorgesehen sein, daß beim Verbringen der Bearbeitungsmodule in die Endposition automatisch die Verbindung zu den Leitungen hergestellt wird. Gemäß der bevorzugten Ausführungsform der Maschine werden die Bearbeitungsmodule mittels Führungsschienen in die Endposition geschoben. Bei dieser Gestaltung lassen sich auf einfache Weise Steckverbindungen realisieren, die beim Einschieben der Bearbeitungsmodule automatisch verbunden werden. Auf diese Weise wird die Montage stark vereinfacht.

Eine Quertraverse kann mit T-Nuten zur verschieblichen Aufnahme von Einrichtungen bspw. von Antriebseinrichtungen versehen sein. In dem Raum zwischen den Seitenwänden und unter den Bearbeitungsmodulen können Aufnahmen zur Aufnahme von Einrichtungen wie Hydraulik/Pneumatikaggregaten, Materialabwickeleinheiten, Steuereinrichtungen, Frequenzumrichter sowie Teilebehälter zur Aufnahme der gefertigten Teile vorgesehen sein, wodurch eine besonders platzsparende Gestaltung erreicht wird.

Die erfindungsgemäße Stanzbiegemaschine kann mittels der Seitenwände mit anderen Maschinen zu einem Berarbeitungszentrum verkoppelbar sein. Die erfindungsgemäße Stanzbiegemaschine kann in einer vorteilhaften Weiterbildung jedoch auch durch Einsetzen zumindest einer weiteren Quertraverse in das Portal erweitert werden.

Weiterhin kann eine Quertraverse mit einer Anschlußeinrichtung zum Anschluß einer weiteren Maschine in einem bestimmten Winkel versehen sein, so daß ein Bearbeitungszentrum über Eck realisierbar ist. Der Anschluß einer weiteren Quertraverse kann mittels eines Zwischenstücks erfolgen, das an die bestehende Quertraverse anschließbar ist.

Die portalförmige Gestaltung der Stanzbiegemaschine eignet sich hervorragend zur Integration einer Schutzvorrichtung, die teilweise durch das Portal selbst gebildet wird. Durch zumindest ein weiteres bewegbares Teil kann eine weitgehend geschlossene Kabine als Schutzvorrichtung geschaffen werden.

Zur Befestigung der Stanzbiegemaschine am Boden, an der Decke oder einem Träger können Befestigungsplatten an den Seitenwänden oder Quertraversen vorgesehen sein. Des weiteren können Schaltpulte und dergleichen einfach am Portal befestigt werden. Mittels Adapterplatten an den Bearbeitungmodulen können auch Werkzeuge anderer Systeme Verwendung finden, um die genannten Vorteile zum schnellen Umrüsten der Maschine zu nutzen.

Folgend werden bevorzugte Ausführungsbeispiele der erfindungsgemäßen Stanzbiegmaschine beschrieben.

Figur 1 zeigt den grundsätzlichen Aufbau einer Grundeinheit der Maschine von vorne.

Figur 2 zeigt die Grundeinheit im Schnitt von der Seite.

Figur 3 zeigt die Grundeinheit in erweiterter Form zur Aufnahme von zwei Bearbeitungsmodulen von vorne.

Figur 4 zeigt die Grundeinheit in weiter erweiterter Form zur Aufnahme von drei Bearbeitungsmodulen von vorne.

Figur 5 zeigt die Maschine gemäß Figur 4 weiter erweitert um ein im rechten Winkel angeschlossenes Portal von oben.

Figur 6 zeigt ein zweites Ausführungsbeispiel der Grundeinheit mit einem einseitig offenen Portal von vorne.

Figur 7 zeigt ein drittes Ausführungsbeispiel ähnlich der Maschine gemäß Figur 4 zur hängenden Montage an einem Träger von vorne.

Figur 8 zeigt ein viertes Ausführungsbeispiel mit teilweise aufgeklappter Schutzkabine.

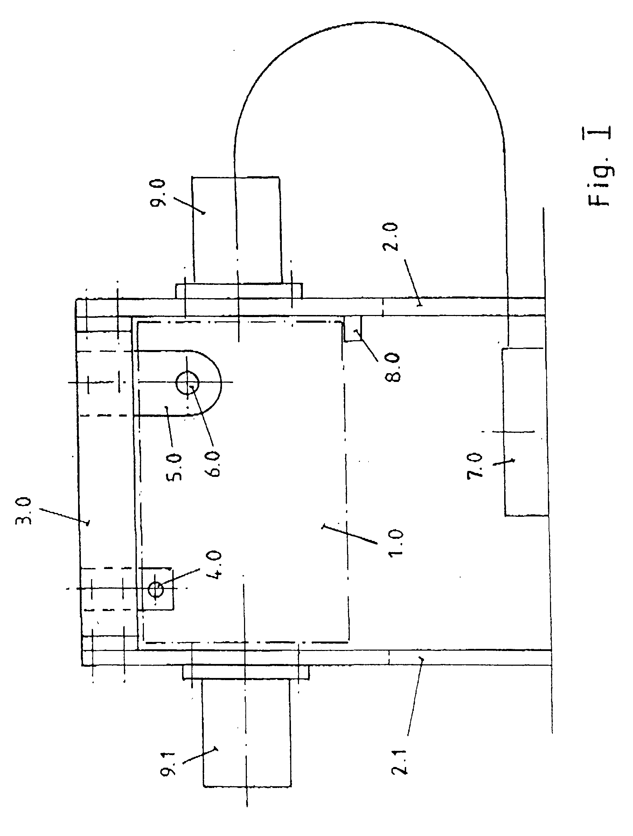

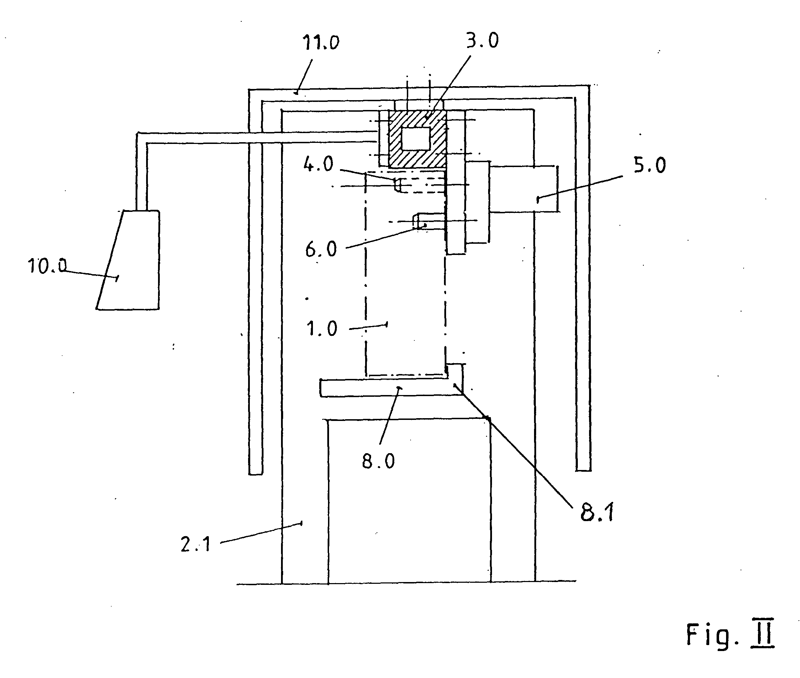

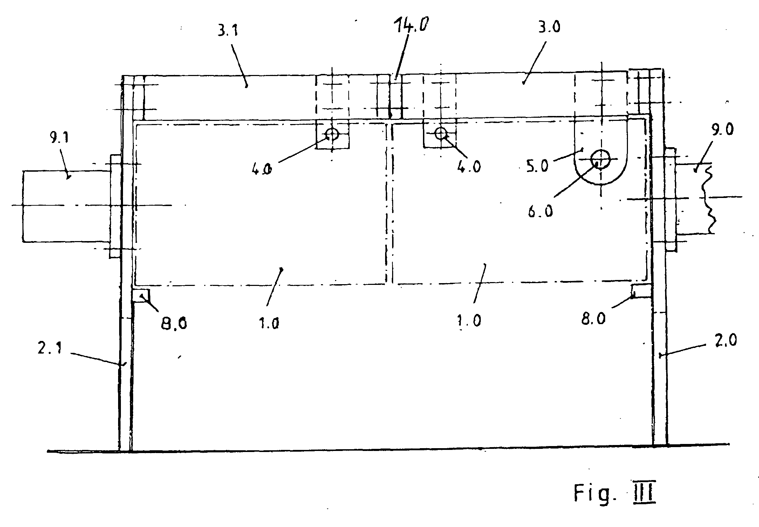

Aus Figur 1 ist gut der grundsätzliche Aufbau der erfindungsgemäßen Stanzbiegemaschine erkennbar. Figur 1 zeigt eine Grundeinheit dieser Maschine. Ein Bearbeitungsmodul 1.0 wird in einem Portal der Maschine aufgenommen, das durch zwei Seitenwände 2.0 und 2.1 sowie eine mit diesen verbindbare Quertraverse 3.0 gebildet wird.

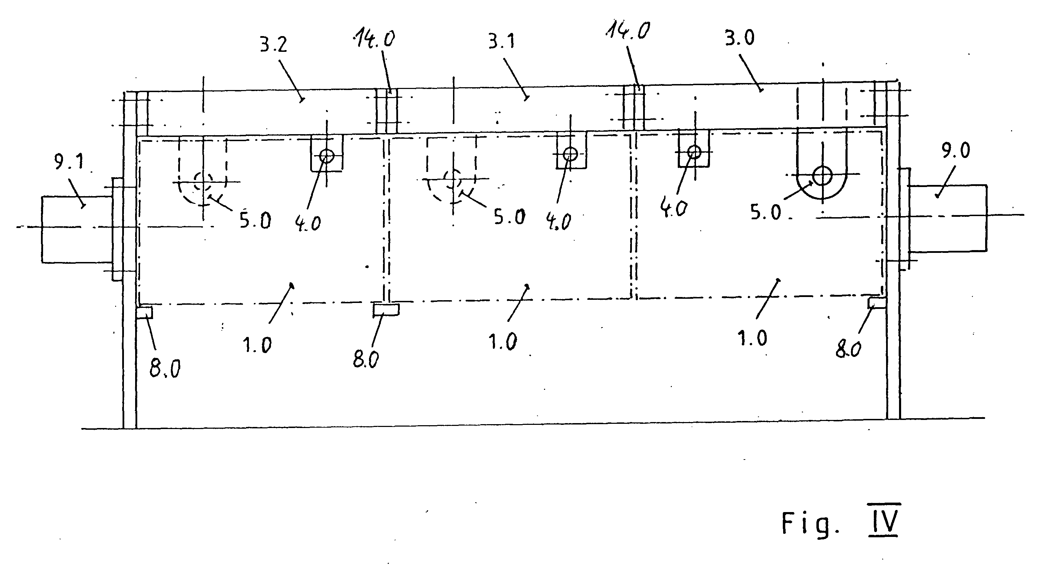

An den Seitenwänden 2.0, 2.1 sind Einzugseinheiten 9.0, 9.1 montiert, mittels denen dem Bearbeitungsmodul 1.0 Material von einer Abwickeleinheit 7.0, die unter dem Bearbeitungsmodul 1.0 angeordnet ist, zugeführt wird. An der rechten Seitenwand 2.0 ist eine Führungsschiene 8.0 vorgesehen, die eine einfache Aufnahme des Bearbeitungsmoduls 1.0 im Portal ermöglicht, was anhand der Figur 2 noch deutlicher erläutert wird.

Das in das Portal eingeschobene Bearbeitungsmodul 1.0 wird von der genannten Führungsschiene 8.0 und einer Zentriereinrichtung 4.0 gelagert. Diese ist an der Quertraverse 3.0 vorgesehen und weist einen Paßstift (nicht dargestellt) auf, der in eine entsprechende Ausnehmung des Bearbeitungsmoduls 1.0 eingreift.

Der Antrieb des Bearbeitungsmoduls 1.0 erfolgt bei dieser Ausführungsform mechanisch mittels einer Antriebseinheit 5.0, die über ein Ritzel 6.0 verfügt, das mit dem Zentralrad (nicht dargestellt) des Bearbeitungsmoduls 1.0 in Eingriff ist. Die Antriebseinheit 5.0 ist an der Quertraverse 3.0 verschieblich in T-Nuten (nicht dargestellt) gelagert. Die für die Antriebseinheit 5.0 sowie das Bearbeitungsmodul 1.0 erforderlichen Versorgungsleitungen werden durch die hohle Quertraverse geführt.

In Figur 2 ist gut die an der Seitenwand 2.0 vorgesehene Führungsschiene 8.0 zu sehen. Diese erlaubt es, das Bearbeitungsmodul 1.0 einfach von vorne auf die Führungsschiene 8.0 aufzusetzen. Das Bearbeitungsmodul 1.0 braucht dann lediglich nach hinten geschoben zu werden, bis die Rückwand des Bearbeitungsmoduls 1.0 den Anschlag 8.1, der bei diesem Ausführungsbeispiel einstückig mit der Führungsschiene 8.0 ausgebildet ist, erreicht hat. Die gewünschte Position des Bearbeitungsmoduls 1.0 wird durch die genannte Zentriereinrichtung 4.0 gewährleistet.

Als weitere Bauteile sind aus der Figur Teile einer Schutzkabine 11.0 zu sehen sowie ein Schaltpult 10.0, das wie die Schutzkabine 11.0 an der Quertraverse 3.0 befestigt ist.

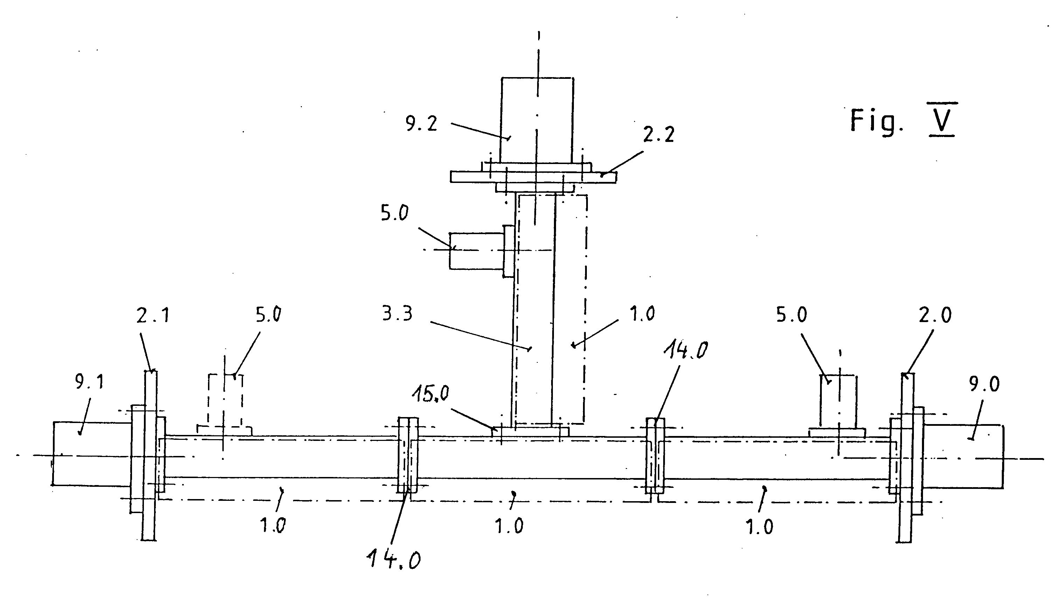

In Figur 3 ist eine erweiterte Maschine zu sehen, die zur Aufnahme von zwei Bearbeitungmodulen 1.0 geeignet ist. Hierzu wird das Portal einfach durch eine weitere Quertraverse 3.1 verlängert, die mittels eines Zwischenstücks 14.0 an die erste Quertraverse 3.0 angeschlossen wird. Auch die zweite links angeordnete Bearbeitungseinheit 1.0 wird mittels einer Führungsschiene 8.0 an der linken Seitenwand 2.1 und einer Zentriereinrichtung 4.0 gelagert. Der Antrieb der Bearbeitungsmodule 1.0 erfolgt bei dieser Ausführungsform mittels einer Antriebseinheit 5.0, die das rechte Bearbeitungsmodul 1.0 antreibt, von dem aus dann die Antriebskraft auf das linke Bearbeitungsmodul 1.0 übertragen wird. Es kann jedoch auch eine zweite Antriebseinheit in derselben Weise angebracht werden, die mit dem zweiten Bearbeitungsmodul in Eingriff gebracht werden kann.

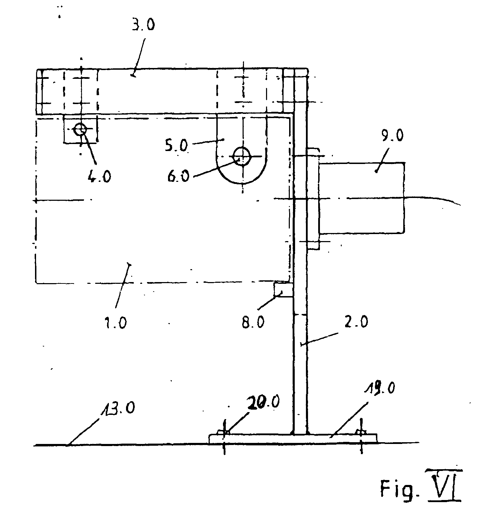

Aus Figur 4 ist eine weitere Erweiterung des Portals zur Aufnahme von drei Bearbeitungsmodulen ersichtlich. Hierzu wird eine dritte Quertraverse 3.2 mittels eines weiteren Zwischenstücks 14.0 an die zweite Quertraverse 3.1. angeschlossen. Zur Lagerung des mittleren Bearbeitungsmoduls 1.0 ist ebenfalls eine Führungsschiene 8.0 vorgesehen. Diese bildet mit dem entsprechenden Zwischenstück 14.0 eine Einheit, so daß das auf dieser aufliegende Gewicht von dem Zwischenstück 14.0 und somit der Quertraverse 3.0 bis 3.2 aufgenommen wird. Bei dem Ausführungsbeispiel gemäß Figur 4 sind drei Antriebseinheiten 5.0 vorgesehen, von denen jede mit einem Bearbeitungsmodul 1.0 in Eingriff ist.

Gemäß einer abweichenden Ausführungsvariante, die in Fig. 8 dargestellt ist, ist eine untere Quertraverse 18.0 vorgesehen, die unterhalb der Bearbeitungsmodule angeordnet ist. Diese eignet sich hervorragend zur Ausbildung von Führungsschienen und allgemein zur Lagerung der Bearbeitungsmodule.

Aus Figur 5 ist eine weiter erweiterte Maschine ersichtlich, bei der ausgehend von der Maschine gemäß Figur 4 in der Mitte der mittleren Quertraverse 3.1 eine weitere vierte Quertraverse 3.3 im rechten Winkel über ein Zwischenstück 15.0 angeschlossen wird. Diese vierte Quertraverse 3.3 wird durch eine dritte Seitenwand 2.2 abgestützt. Der Antrieb des unterhalb der vierten Quertraverse 3.3. montierten Bearbeitungsmoduls 1.0 erfolgt über eine an der Quertraverse 3.3 in bekannter Weise vorgesehene Antriebseinheit. Die Materialzufuhr zu diesem Bearbeitungsmodul 1.0 erfolgt über eine dritte Einzugseinheit 9.2.

Bei einer abweichenden nicht dargestellten Ausführungsvariante ist das Zwischenstück in der Lage, Antriebsleistung von dem Bearbeitungsmodul, das unterhalb der Quertraverse, an der das Zwischenstück angeschlossen ist, auf das im rechten Winkel angebaute Bearbeitungsmodul zu übertragen. Diese Übertragung erfolgt über einen Getriebezug, der mit den Zentralrädern der beiden Bearbeitungsmodule in Eingriff ist.

Erfolgt der Antrieb der Maschine dagegen hydraulisch oder pneumatisch muß lediglich die entsprechende Druckleitung mittels des Zwischenstückes in die angeschlossene Quertraverse abgezweigt werden.

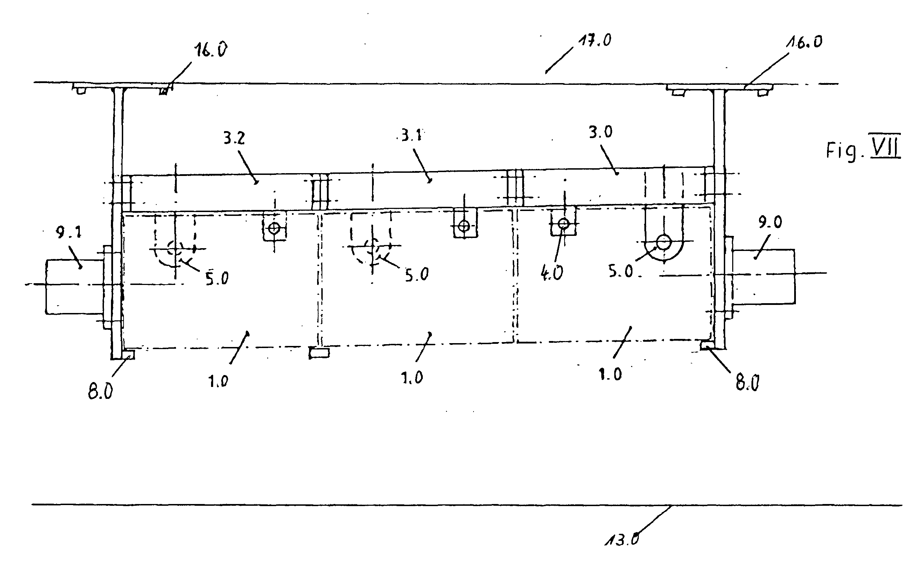

Figur 6 zeigt ein weiteres Ausführungsbeispiel, das sich von dem bereits beschriebenen Ausführungsbeispiel lediglich durch eine offene Portalkonstruktion unterscheidet. Bei dieser Konstruktion stützt sich die Quertraverse 3.0 lediglich an einer Seitenwand 2.0 ab, so daß sich ein offenes L-förmiges Portal ergibt. Die Seitenwand wird über eine Befestigungsplatte 19.0 mittels Bolzen 20.0 am Boden 13.0 verankert. Die Seitenwand 2.0 bzw. die Quertraverse 3.0, also das Portal kann so ausgeführt sein, daß dieses ein von vorne zugängliches Bearbeitungsmodul 1.0 sowohl von der rechten als auch von der linken Seite her aufnehmen kann. Das heißt, links von der gezeigten Maschine kann um 180° gedreht ein identisches Portal aufgestellt werden, wobei die Quertraversen mittels eines Zwischenstückes verbindbar sind und die Maschine kann so zu einer Portalmaschine mit zwei Seitenwänden zur Aufnahme von zwei Bearbeitungsmodulen ergänzt werden. Eine weitere Erweiterung durch das Einfügen weiterer Quertraversen ist natürlich möglich.

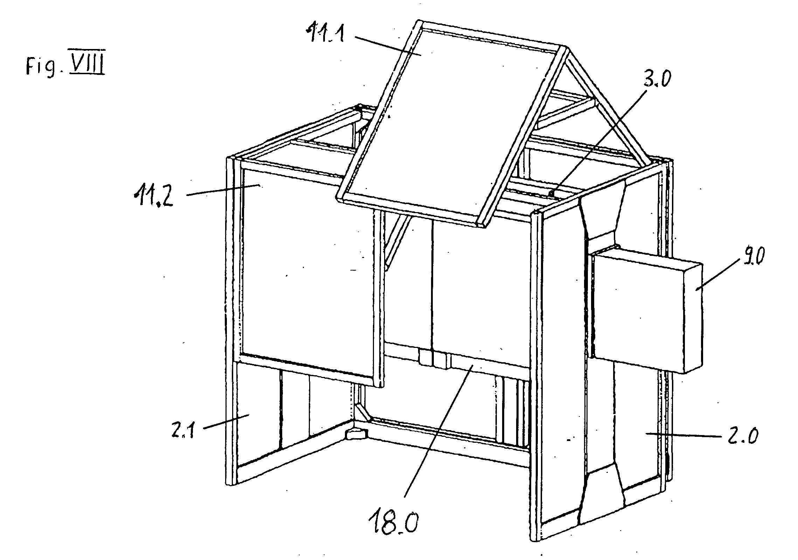

Figur 7 zeigt eine Maschine, die grundsätzlich der Maschine gemäß Figur 4 entspricht, jedoch nicht zur stehenden, sondern hängenden Montage gedacht ist. Die Quertraversen 3.0 bis 3.2 sind in einem mittleren Bereich der Seitenwände 2.0, 2.1 vorgesehen, die mittels Befestigungsplatten 16.0 an einem Träger 17.0 befestigt sind.

Figur 8 zeigt in dreidimensionaler Darstellung eine Maschine mit Schutzkabine 11.0, die zwei verschwenkbare Elemente 11.1 und 11.2 umfaßt, um einen leichten Zugang zum Bearbeitungsmodul 1.0 zu gewährleisten.

## Patentansprüche

1. Stanzbiegemaschine zur Fertigung unterschiedlicher Werkstücke, die mit zumindest einem auswechselbaren Bearbeitungsmodul (1.0) ausrüstbar ist, an dem Stanzbiegewerkzeuge vorgesehen sind, die mechanisch, hydraulisch oder pneumatisch angetrieben werden können, **dadurch gekennzeichnet, daß** das Bearbeitungsmodul (1.0) von einem Portal aufgenommen wird, das über mindestens eine Seitenwand (2.0, 2.1) und eine mit dieser verbindbaren Quertraverse (3.0) verfügt, wobei Lagereinrichtungen zur Lagerung des Bearbeitungsmoduls (1.0) vorgesehen sind.

2. Stanzbiegemaschine nach Anspruch 1, dadurch gekennzeichnet, daß eine zweite Seitenwand (2.1) vorgesehen ist, die mit der Quertraverse (3.0) verbindbar ist.

3. Stanzbiegemaschine nach einem der Ansprüche 1 oder 2, dadurch gekennzeichnet, daß eine zweite Quertraverse (3.1) vorgesehen ist, wobei eine Quertraverse (3.0) oberhalb des Bearbeitungsmoduls (1.0) und die zweite Quertraverse (3.1) unterhalb des Bearbeitungsmoduls (1.0) angeordnet ist.

4. Stanzbiegemaschine nach einem der Ansprüche 1 bis 3, dadurch gekennzeichnet, daß zumindest eine Führungsschiene (8.0) als Lagereinrichtung vorgesehen ist.

5. Stanzbiegemaschine nach einem der Ansprüche 1 bis 4, dadurch gekennzeichnet, daß zumindest eine Zentriereinrichtung (4.0) zur Zentrierung des Bearbeitungsmoduls (1.0) vorgesehen ist.

6. Stanzbiegemaschine nach einem der Ansprüche 1 bis 5, dadurch gekennzeichnet, daß die Lagereinrichtung einen Anschlag (8.1) für das Bearbeitungsmodul (1.0) aufweist.

7. Stanzbiegemaschine nach einem der Ansprüche 1 bis 6, dadurch gekennzeichnet, daß an einer Quertraverse (3.0, 3.1, 3.2) zumindest eine Antriebseinrichtung (5.0) zum Antrieb eines Bearbeitungsmoduls (1.0) montierbar ist.

8. Stanzbiegemaschine nach Anspruch 7, dadurch gekennzeichnet, daß die Positionierung der Antriebseinrichtung (5.0) verstellbar ist und diese mit unterschiedlich vorgesehenen Bearbeitungsmodulen (1.0) in Eingriff bringbar ist.

9. Stanzbiegemaschine nach einem der Ansprüche 1 bis 8, dadurch gekennzeichnet, daß durch Einsetzen zumindest einer weiteren Quertraverse (3.1, 3.2) in das Portal die Maschine erweiterbar ist.

10. Stanzbiegemaschine nach einem der Ansprüche 1 bis 9, dadurch gekennzeichnet, daß zumindest eine Quertraverse (3.1, 3.2) mit einer Anschlußeinrichtung zum Anschluß einer weiteren Maschine in einem bestimmten Winkel ausrüstbar ist.

## Claims

1. Punching-bending machine for manufacturing different workpieces, which can be fitted with at least one exchangeable processing module (1.0) with punching and bending tools provided thereon which can be driven mechanically, hydraulically or pneumatically, **characterised in that** the processing module (1.0) is accommodated by a gantry which comprises at least one sidewall (2.0, 2.1) and a thereto connectable crossbeam (3.0), and with mounting devices for mounting the processing module (1.0).

2. Punching-bending machine according to Claim 1, **characterised in that** a second sidewall (2.1) is provided which is connectable to the crossbeam (3.0).

3. Punching-bending machine according to one of Claims 1 or 2, **characterised in that** a second crossbeam (3.1) is provided, and one crossbeam (3.0) is arranged above the processing module (1.0) and the second crossbeam (3.1) below the processing module (1.0).

4. Punching-bending machine according to one of Claims 1 to 3, **characterised in that** at least one guide rail (8.0) is provided as mounting device.

5. Punching-bending machine according to one of Claims 1 to 4, **characterised in that** at least one centring device (4.0) is provided for centring the processing module (1.0).

6. Punching-bending machine according to one of Claims 1 to 5, **characterised in that** the mounting device comprises a stop (8.1) for the processing module (1.0).

7. Punching-bending machine according to one of Claims 1 to 6, **characterised in that** at least one drive mechanism (5.0) for driving a processing module (1.0) can be mounted onto a crossbeam (3.0, 3.1, 3.2).

8. Punching-bending machine according to Claim 7, **characterised in that** the positioning of the drive mechanism (5.0) is adjustable and that the latter can be engaged with different provided processing modules (1.0).

9. Punching-bending machine according to one of Claims 1 to 8, **characterised in that** the machine is extendible by insertion of at least one additional crossbeam (3.1, 3.2) into the gantry of the machine.

10. Punching-bending machine according to one of Claims 1 to 9, **characterised in that** at least one crossbeam (3.1, 3.2) can be equipped with a connection device for connection of an additional machine at a specified angle.

## Revendications

1. Machine à estamper/cintrer pour produire des pièces à oeuvrer différentes, qui peut être équipée d'au moins un module d'usinage interchangeable (1.0) sur lequel sont prévus des outils à estamper/cintrer qui peuvent être entraînés par voie mécanique, hydraulique ou pneumatique, caractérisée en ce que le module d'usinage (1.0) est reçu par un portique qui dispose d'au moins une paroi latérale (2.0, 2.1) et d'une traverse (3.0) susceptible d'être reliée à celle-ci, des dispositifs de montage étant prévus pour monter le module d'usinage (1.0).

2. Machine à estamper/cintrer selon la revendication 1, caractérisé en ce qu'il est prévu une seconde paroi latérale (2.1) susceptible d'être reliée à la traverse (3.0).

3. Machine à estamper/cintrer selon l'une ou l'autre des revendications 1 et 2, caractérisée en ce qu'il est prévu une seconde traverse (3.1), une traverse (3.0) étant agencée au-dessus du module d'usinage (1.0) et la seconde traverse (3.1) étant agencée au-dessous du module d'usinage (1.0).

4. Machine à estamper/cintrer selon l'une quelconque des caractéristiques 1 à 3, caractérisée en ce qu'il est prévu au moins un rail de guidage (8.0) en tant que dispositif de montage.

5. Machine à estamper/cintrer selon l'une quelconque des revendications 1 à 4, caractérisée en ce qu'il est prévu au moins un dispositif de centrage (4.0) pour centrer le module d'usinage (1.0).

6. Machine à estamper/cintrer selon l'une quelconque des revendications 1 à 5, caractérisée en ce que le dispositif de montage comprend une butée (8.1) pour le module d'usinage (1.0).

7. Machine à estamper/cintrer selon l'une quelconque des revendications 1 à 6, caractérisée en ce qu'au moins un dispositif d'entraînement (5.0) pour entraîner un module d'usinage (1.0) peut être monté sur une traverse (3.0, 3.1, 3.2).

8. Machine à estamper/cintrer selon la revendication 7, caractérisée en ce que le positionnement du dispositif d'entraînement (5.0) est variable et celui-ci peut être amené en engagement avec des modules d'usinage différents (1.0).

9. Machine à estamper/cintrer selon l'une quelconque des revendications 1 à 8, caractérisé en ce que la machine peut être agrandie par mise en place d'au moins une autre traverse (3.1, 3.2) dans le portique.

10. Machine à estamper/cintrer selon l'une quelconque des revendications 1 à 9, caractérisée en ce qu'au moins une traverse (3.1, 3.2) peut être équipée d'un dispositif de raccordement pour raccorder une autre machine sous un angle déterminé.
